# EUROPEAN PATENT APPLICATION

(11) **EP 2 327 626 A1**
(43) Date of publication of application: **01.06.2011**
(21) Application number: 10192814.1
(22) Date of filing: 26.11.2010
(51) Int. Cl.: B64C 39/02, G01W 1/08

(54) **Air pollutants monitoring by a continuous process in real time and at different altitudes**

(30) Priority: 27.11.2009 IT CE20090012
(71) Applicant: Universita' Degli Studi di Napoli Parthenope, 80133 Napoli (IT)
(72) Inventor: Lega, Massimiliano, 80127, Napoli (IT); Napoli, Rodolfo, 84010, Furore (SA) (IT)
(74) Representative: Dini, Roberto

(57) **Abstract**

The present invention relates to a process for continuously monitoring, in real time and at different altitudes, airborne pollutants.

In particular, by using a multi-rotor flying platform, a fluid dynamic conveyance system, a specific sensor and a remote transmission system for transmitting the collected data, it is possible to monitor the presence, and possibly also the concentration, of airborne pollutants along vertical transepts and/or spatial trajectories. The process is implemented by coupling single elements, appropriately built and integrated, according to a predefined sequence and by imposing a certain operational procedure. In particular, it must be pointed out that:
- the multi-rotor platform has no humans aboard and is controlled remotely, although it includes an on-board automatic flight stabilization system and a system for stopping the flight in the event of failures and/or malfunctions.
- the fluid dynamic conveyance system consists of a truncated-cone element arranged in the upper part of the platform and securely anchored thereto; more in detail, the length of this element is such that it allows the monitored air to be taken partly outside the interference field of the rotors, and the flow inlet and outlet areas are so arranged as to allow the air to flow without any hindrance.
- the airborne pollutant sensor is located in the upper part of the platform, at the base of the fluid dynamic conveyance system, and its sensitive part is immersed in the outgoing flow.
The platform, assembled with the fluid dynamic conveyance system, a specific sensor and a system for remotely transmitting the collected data, is flown along vertical trajectories where stop points are imposed at different altitudes and repositioning shifts are made by means of translational movements. The vertical transepts are obtained by imposing paths that follow lines orthogonal to the ground plane and with one vertex lying therein.

## Description

The present invention relates to a process for continuously monitoring, in real time and at different altitudes, of airborne pollutants.

In particular, by using a multi-rotor flying platform, a fluid dynamic conveyance system, a specific sensor and a remote transmission system for transmitting the collected data, it is possible to monitor the presence, and possibly also the concentration, of airborne pollutants along vertical transepts and/or spatial trajectories. So far many technologies and processes are known to be intended for sampling and/or monitoring pollutants, but much fewer references can be found for the study of airborne pollutants.

Moreover, very few, if any, processes are known for monitoring altitude airborne pollutants.

Finally, no processes are known yet for monitoring airborne pollutants which provide activities at different altitudes and use unmanned electrically-driven flying platforms together with fluid dynamic conveyors and sensors featuring continuous monitoring technologies and real-time data transmission and analysis at a ground station.

For instance, the national literature includes patent no. 0001335299 - (2002-2006 - invention for detecting airborne pollutants in an urban environment, consisting of a centrifugal system coupled to a tangential pick-up), which however does not provide continuous detection activities at different altitudes with real-time monitoring.

Even in the patents mentioned below, although a monitoring activity is generally provided, no activity is stated which is carried out at different altitudes by means of a multi-rotor flying platform, with remote control and without humans aboard:
● patent no. 0001286360 - (1996-1998 - apparatus and method for monitoring environmental air)
● patent no. 0001321093 - (2000-2003 - device and method for monitoring the fuel/air ratio in a mixture of air and vapours exiting a fuel vapour accumulator.)
● patent no. 0001333853 - (2002-2006 - processes for monitoring an urban environment, in particular the air thereof)
● patent no. UD2003A000232 (2003-2007 - method and related sensor-sampler
   for monitoring and sampling ferromagnetic dust in air and liquids)

It must be stated right away that all the above patent literature, although similar to the present proposal because of some common terminology, does not however fall within the specific field of the present invention; in particular, much novelty is apparent from the above analysis, mainly due to the aspect related to the possibility of monitoring pollutants at different altitudes by using multi-rotor flying platforms without humans aboard.

The process is implemented by coupling single elements, appropriately built and integrated, according to a predefined sequence and by imposing a certain operational procedure.

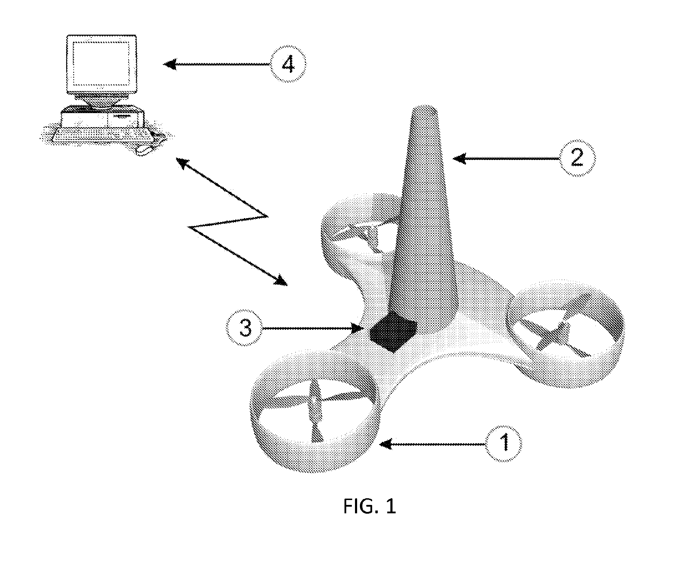

Fig. 1 clearly shows the process described herein by illustrating the main physical components arranged in the respective positions for carrying out the desired activities; the functional connections among the various components are shown as well.

The main components, which ensure the effectiveness of the process described herein, are the following:
■ multi-rotor flying platform 1,
■ fluid dynamic conveyor 2,
■ airborne pollutant sensor 3,
■ ground station 4 for: receiving the transmitted/received data ― aircraft control ― visualization and processing of platform/sensor data.

Each component listed above will now be described with reference to Fig. 1.

In particular, it must be pointed out that:
- the multi-rotor platform is electrically driven, has no humans aboard, and is remotely controlled;
- in the example of Fig. 1, the multi-rotor platform comprises six drive units, each comprising a motor that drives a respective propeller. The six drive units are contained in pairs within tubes; this improves the platform's flying performance and safety of operation, by protecting the propellers from contact with extraneous bodies. The three drive unit pairs are positioned at the ends of the multi-rotor platform, in particular according to a Y layout, i.e. at the vertices of a triangle. This layout, combined with the independent control of each drive unit, provides total control over the platform within a three-dimensional space, with no flight parameter being binding as to the trajectory to follow during the monitoring activity. In particular, this layout allows a vectorial type of motion.

- the multi-rotor platform has an on-board automatic flight stabilization system, as well as a system for stopping the flight in the event of failures and/or malfunctions;
- the fluid dynamic conveyance system consists of a truncated-cone element open at both bases, thus forming an air intake channel. The fluid dynamic conveyor is arranged in the upper part of the platform and is securely anchored thereto; in particular, the fluid dynamic conveyor is mounted at the centre of the multi-rotor platform so that the axis of the intake channel is parallel to the axes of rotation of the drive units. The length of the fluid dynamic conveyor is such that it allows the monitored air to be taken partly outside the interference field of the rotors, and the flow inlet and outlet areas are so arranged as to allow the air to flow without any hindrance; preferably the length of the fluid dynamic conveyor is such that it allows the monitored air to be taken in outside the interference field of the rotors, with the suction channel intake completely outside the turbulent flow generated by the drive units.
- the airborne pollutant sensor is located in the upper part of the platform, at the base of the fluid dynamic conveyance system, and its sensitive part is immersed in the outgoing flow.

In order to ensure that the process is carried out properly, the multi-rotor platform, assembled with the fluid dynamic conveyance system, a specific sensor and a system for remotely transmitting the collected data, is flown along vertical trajectories, where stop points are imposed at different altitudes and repositioning shifts are made by means of translational movements.

Thanks to the multi-rotor platform's vectorial motion, full control is gained over yaw, pitch and roll, so that all points of a three-dimensional matrix can be reached with the utmost precision, within a single monitoring trajectory.

The vertical transepts are obtained by imposing paths that follow lines orthogonal to the ground plane and with one vertex lying therein.

What is detected by the platform's on-board sensor is transmitted to a ground station where the received data can be displayed, analyzed and saved.

The data collected by the platform's on-board sensor can be georeferenced thanks to the possibility of using the multi-rotor's sensing technology that allows it to fly autonomously, semi-autonomously and/or under remote control.

The airborne pollutant sensor stays on for the entire duration of the mission/flight, thus ensuring continuous measurement.

The remote data transmission system available aboard the multi-rotor platform is coupled to a data reception system available at the ground station, so that the data can be transferred and displayed in real time.

Finally, the possibility of displaying the 3D position of the multi-rotor flying platform in real time at the ground station allows said platform to be guided through predetermined stop-point sequences that make up a spatial sampling grid of the scenario under examination.

In particular, our system is also characterized by the use of a fluid dynamic conveyor that allows to analyze air not perturbed by the propulsion and sustentation system of the above-mentioned flying platform.

It should also be pointed out that the motors used for driving the multi-rotor's propellers are electric ones, and therefore the scenario under examination cannot be affected by pollutants generated by combustion systems (as typically used by internal combustion engines).

The following example no. 1 describes an operational procedure specifically conceived for **"CO₂ monitoring by a continuous process, in real time and at different altitudes".**

### EXAMPLE No. 1

### CO₂ monitoring by a continuous process, in real time and at different altitudes

A multi-rotor flying platform is assembled which includes a fluid dynamic conveyor, a **CO₂** sensor, and a remote transmission system for transmitting data to a ground station; In particular, for this specific application the technical specifications of the main employed components are the following:
● electrically-driven multi-rotor system, with a max. outside diameter of 60 cm, 2.4GHz RC remote control system, MEMS self-stabilization system, GPS localization system;
● fluid dynamic conveyor with truncated-cone geometry and total length of 65 cm;
● **CO₂** sensor with Al-In-Sb electro-optical technology (semiconductor/photodiode coupling); sensitive element diameter 20 mm, max. "plan" dimensions 25x40 mm; RS-232 data port;
● remote data transmission system based on a serial radio modem operating at 2.4 GHz.

A ground station is prepared for transmitting/receiving and processing the flying platform's data. In particular, for this specific application the technical specifications of the main components employed are as follows:
● no. 1 laptop PC
● no. 1 serial radio modem operating at 2.4 GHz
● 2.4 GHz TX R/C

The interconnection between the system to be flown and the R/C-ground station is verified by checking the received data and by executing specific commands of actuation of the guidance/navigation/control system;

At the ground station-laptop PC, the process is then started for checking and saving of the data analyzed and transmitted by the system/sensor aboard the multi-rotor (while ensuring the continuous, real-time operation thereof through a suitable setup of the serial transfer parameters).

The multi-rotor platform is placed with the sensor/fluid dynamic conveyor in the proximity of an airborne pollutant source of known position and concentration in order to validate/calibrate the collected data;

The platform thus prepared is then flown into the context to be monitored and guided along predefined trajectories at different altitudes with stop/measurement points; the vertical transepts are obtained by imposing paths that follow lines orthogonal to the ground plane and with one vertex lying therein.

The received data is processed and displayed at the ground station.

The entire process offers the possibility of displaying the 3D position of the multi-rotor flying platform in real time at the ground station, so that said platform can be guided through predetermined sequences of stop/measurement points that make up a spatial sampling grid of the scenario under examination to which the data collected by the on-board sensor can be attributed.

## Claims

1. A continuous process for monitoring airborne pollutants, in real time and at different altitudes, comprising the following steps:
a. setting up a multi-rotor flying unmanned platform, comprising a fluid dynamic conveyor that comprises a truncated-cone element arranged in the upper part of said platform and anchored thereto, an airborne pollutant sensor arranged at the base of said fluid dynamic conveyor, with a sensitive part immersed in the flow exiting said fluid dynamic conveyor, and a remote transmission/reception system for transmitting/receiving data to/from a ground station;
b. setting up a ground station for receiving/transmitting and processing the data of the platform referred to in a);
c. interconnecting the systems referred to in a) and b) through a wireless remote data transmission system;
d. verifying the interconnection referred to in c) by checking the data received by the ground station after placing the system referred to in a) in the proximity of an airborne pollutant source of known geographical position and concentration;
e. flying the platform, prepared as described in a), into the context to be monitored along predefined trajectories at different altitudes, with stop points defined by a 3D grid;
f. receiving, processing, displaying and saving the data analyzed and transmitted (continuously and in real time) by the system referred to in a) by receiving and processing it at the station referred to in b);

2. A process according to claim 1, wherein the length of said fluid dynamic conveyor is such that it allows the monitored air to be taken in at least partly outside the interference field of the rotors, so that it allows to analyze air that is not perturbed by the propulsion and sustentation system of the multi-rotor flying platform.

3. A process according to claim 2, wherein the flow inlet and outlet areas of said fluid dynamic conveyor are so arranged as to allow the air to flow without any hindrance.

4. A process according to one of claims 1 to 3, wherein said multi-rotor flying platform comprises six drive units, each comprising a motor that drives a respective propeller, said drive units being arranged in pairs at the ends of said multi-rotor platform according to a Y layout, and wherein said fluid dynamic conveyor is mounted at the centre of said multi-rotor platform so that the axis of the intake channel is parallel to the axes of rotation of the drive units, and wherein each drive unit is controlled independently.

5. A process according to claim 4, wherein each pair of said drive units is contained within a tube.

6. A process according to one of claims 1 to 5, wherein said multi-rotor flying platform is electrically driven, so that the scenario under examination cannot be affected by pollutants generated by on-board combustion systems.

7. A process according to one of claims 1 to 6, wherein the 3D position of the multi-rotor flying platform is displayed in real time at the ground station, and said multi-rotor flying platform is guided through predetermined sequences of stop/measurement points that make up a spatial sampling grid of the scenario under examination to which the data collected by the on-board sensor can be attributed.

8. A device for monitoring airborne pollutants, comprising a fluid dynamic conveyor that comprises a truncated-cone element arranged in the upper part of said platform and anchored thereto, an airborne pollutant sensor arranged at the base of said fluid dynamic conveyor, with a sensitive part immersed in the flow exiting said fluid dynamic conveyor, and a remote transmission/reception system for transmitting/receiving data to/from a ground station.

9. A device for monitoring airborne pollutants according to claim 8, wherein the length of said fluid dynamic conveyor is such that it allows the monitored air to be taken in at least partly outside the interference field of the rotors, so that it allows to analyze air not perturbed by the propulsion and sustentation system of the multi-rotor flying platform.

10. A device according to claim 9, wherein said length is greater than the maximum outside diameter of said multi-rotor platform.

11. A device according to claim 9 or 10, wherein the flow inlet and outlet areas of said fluid dynamic conveyor are so arranged as to allow the air to flow without any hindrance.

12. A device according to one of claims 8 to 11, wherein said multi-rotor flying platform comprises six drive units, each comprising a motor that drives a respective propeller, said drive units being arranged in pairs at the ends of said multi-rotor platform according to a Y layout, and wherein said fluid dynamic conveyor is mounted at the centre of said multi-rotor platform so that the axis of the intake channel is parallel to the axes of rotation of the drive units, and wherein each drive unit is controlled independently.

13. A device according to claim 12, wherein each pair of said drive units is contained within a tube.

14. A device according to one of claims 8 to 13, wherein said multi-rotor flying platform is electrically driven.
